# EUROPÄISCHE PATENTANMELDUNG

(11) **EP 3 461 626 A1**
(43) Veröffentlichungstag der Anmeldung: **03.04.2019**
(21) Anmeldenummer: 18197239.9
(22) Anmeldetag: 27.09.2018
(51) Int. Cl.: B29C 70/88, B64D 45/02, D04H 1/4242, D04H 1/587, D06M 11/74, D06M 101/40

(54) **CARBON-AEROGEL-VERBUND-PREPREG**

(30) Priorität: 29.09.2017 DE 202017105966 U
(71) Anmelder: Airbus Operations GmbH, 21129 Hamburg (DE)
(72) Erfinder: Robrecht, Volker, 21129 Hamburg (DE); Ruppert, Bernd, 21129 Hamburg (DE); Linde, Peter, 21129 Hamburg (DE)

(57) **Zusammenfassung**

Kohlenstofffaser, die mit einem leitfähigen Kohlenstoff-Aerogel beschichtet ist.

## Beschreibung

### Gebiet der Erfindung

Die Erfindung betrifft neue Blitzschutzmaterialien, insbesondere für die Verwendung bei Luftfahrzeug-Großbauteilen aus CFK, wie etwa einem Flugzeugrumpf.

### Hintergrund der Erfindung

Moderne Flugzeuge können Flügel oder Rümpfe aus Kohlefaserverbundwerkstoffen (CFK) aufweisen. Da diese nicht in gleicher Weise wie metallische Rümpfe dazu geeignet sind, Blitzeinschläge zu tolerieren, ist die Verwendung eines Metallgewebes erforderlich, um im Falle eines Blitzschlags elektrischen Strom zu führen. Ein Nachteil des leichteren und steiferen CFK-Verbundes ist eine geringere Leitfähigkeit für elektrischen Strom. Daher wird ein Gitter aus Kupfer oder Aluminium auf der Außenseite der CFK-Verbundhaut aufgebracht. Die hohe Leitfähigkeit des Kupfers bringt eine Gewichtszunahme der ganzen Haut mit sich. Ein leichteres Aluminium-Mesh muss dicker sein als ein Kupfergewebe, um die gleiche Leitfähigkeit zu liefern.

Eine Aufgabe der vorliegenden Erfindung war das Bereitstellen von Hilfsstoffen, die zur Reparatur von mit thermoplastischen Matrixmaterial imprägnierte Faserverbundwerkstoffen geeignet sind und die Reparaturen einfacher und schneller machen.

### Beschreibung der Erfindung

Es hat sich nun für den Fachmann völlig überraschend herausgestellt, dass Kohlenstofffaser, die mit einem leitfähigen Kohlenstoff-Aerogel beschichtet ist, den Nachteilen des Standes der Technik abhilft. Bevorzugt ist es, wenn solche beschichteten Kohlenstofffasern als Strang, Gewebe oder Vlies vorliegen. Das Kohlenstoff-Aerogel hat viel höhere Leitfähigkeitseigenschaften als Kohlenstoff, was dazu führt, dass die neue Kohlenstofffaser bessere Leitfähigkeitseigenschaften erhält als normales CFK. Kohlenstoff-Aerogele (z. B. aerographit) sind extrem leicht (leichter als Luft), da es Matrixmaterial ersetzt, die globale Dichte wird reduziert, was zu weniger Gewicht führt. Die vorgeschlagene Die Erfindung bezieht sich auch auf die Herstellung eines Netzes von Kohlenstofffaserumhüllung mit Kohlenstoff-Aerogel. Das entstehende Carbonfaser-Prepreg kann in die CFK-Struktur eingebettet sein. Die Erfindung kann auch an verschiedenen anderen Orten verwendet werden.

Bevorzugt ist es, wenn solche beschichteten Kohlenstofffasern in einem Luftfahrzeugbauteil das überwiegend aus Kohlensoffaserverbund besteht, enthalten sind. Bevorzugt ist es, wenn die Kohlenstofffasern, Stränge, Gewebe oder Vliesse Teil des Kohlensoffaserverbundes sind. Damit kann das Kupfer-Gitter in der Verbundhaut von Verkehrsflugzeugen ersetzt werden. Die Erfoindung umfasst auch ein Luftfahrzeug, Flugzeug oder Blitzschutzmittel für Luftfahrzeuge enthaltend erfindungsgemäße Kohlenstofffasern, Stränge, Gewebe oder Vliesse.

Die oben beschriebenen Aspekte und weitere Aspekte, Merkmale und Vorteile der Erfindung können ebenfalls aus den Beispielen der Ausführungsformen entnommen werden, welche im Folgenden unter Bezugnahme auf die anhängenden Zeichnungen beschrieben werden.

### Kurze Beschreibung der Zeichnungen

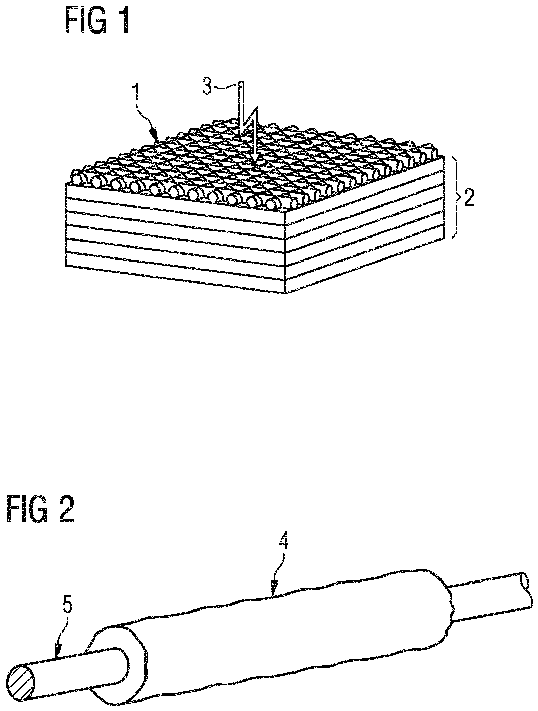

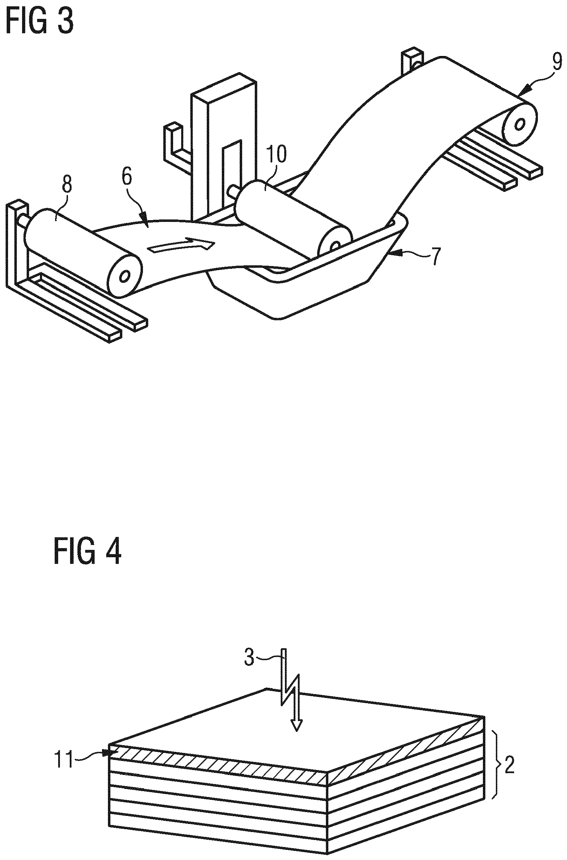

Figur 1 zeigt ein Metallgitter auf einem CFK-Verbund. Figur 2 zeigt eine mit Kohlenstoff-Aerogel beschichtete Kohlefaser, Figur 3 zeigt die Herstellung solcher umhüllten Kohlefasern, Figur 4 zeigt eine Schicht aus Carbonfasern mit Aerogel-Beschichtung auf einem CFK-Verbund.

In den Figuren werden gleiche Bezugszeichen für gleiche oder zumindest ähnliche Elemente, Komponenten oder Aspekte verwendet. Es wird angemerkt, dass im Folgenden Ausführungsformen im Detail beschrieben werden, die lediglich illustrative und nicht beschränkend sind.

### Detaillierte Beschreibung von Ausführungsformen

Figur 1 zeigt ein Metallgitter (1) das auf ein CFK-Verbund (2) aufgebracht wurde. Ein solches Metallgitter (1) kann aus Kupfer bestehen und wird auch als Kupfer-mesh bezeichnet. Es leite Ströme, die durch einen Blitzeinschlag (3) hervorgerufen werden ab.
Figur 2 zeigt eine mit Kohlenstoff-Aerogel (4) beschichtete Kohlefaser (5). Dabei wird die Kohlefaser (5) mit Kohlenstoff-Aerogel (4) umhüllt.
Figur 3 zeigt die Herstellung der mit Kohlenstoff-Aerogel (4) umhüllten Kohlefaser (5). Dabei werden die Kohlenstofffasern in Form von Bändern oder Strängen (6) durch ein Kohlenstoff-Aerogelbad (7) bewegt. Die Fasern (6) können Prepregs darstellen. Unbehandelte Kohlenstofffasern können in aufgerollter Form (8) zum Einsatz kommen. Das gewonnene Carbonfaser-Prepreg mit Aerogel-Beschichtung (9) kann ebenfalls in aufgerollter Form gewonnen werden. Eine Rolle oder Walze (10) kann die Kohlenstofffasern in Form von Bändern oder Strängen (6) in das Kohlenstoff-Aerogelbad (7) eintauchen.
Figur 4 zeigt eine Schicht aus Carbonfasern mit Aerogel-Beschichtung (11) das auf ein CFK-Verbund (2) aufgebracht wurde. Die Schicht (11) kann Ströme, die durch einen Blitzeinschlag (3) hervorgerufen werden, ableiten. Es können eine oder mehrere Lagen an Carbonfasern mit Aerogel-Beschichtung als Deckschicht vorgesehen und mit klassischer Harzmatrix aufgebracht werden.

Während die Erfindung illustriert und beschrieben wurde im Detail in den Zeichnungen und der vorangegangenen Beschreibung, ist es beabsichtigt, dass derartige Illustrationen und Beschreibungen lediglich illustrativ oder exemplarisch und nicht restriktiv sind, so dass die Erfindung nicht durch die offenbarten Ausführungsformen beschränkt ist. In den Ansprüchen schließt das Wort "aufweisend" nicht andere Elemente aus und der unbestimmte Artikel "ein" schließt eine Mehrzahl nicht aus.

Alleinig der Umstand, dass bestimmte Merkmale in verschiedenen abhängigen Ansprüchen genannt sind, beschränkt nicht den Gegenstand der Erfindung. Auch Kombinationen dieser Merkmale können vorteilhaft eingesetzt werden. Die Bezugszeichen in den Ansprüchen sollen nicht den Umfang der Ansprüche beschränken.

### Bezugszeichenliste

- 1: Metallgitter
- 2: CFK-Verbund
- 3: Blitzeinschlag
- 4: Kohlenstoff-Aerogel
- 5: Kohlefaser
- 6: Kohlenstofffasern in Form von Bändern oder Strängen
- 7: Aerogelbad
- 8: Carbonfaser-Prepreg
- 9: Carbonfaser-Prepreg mit Aerogel-Beschichtung
- 10: Rolle oder Walze
- 11: Schicht aus Carbonfasern mit Aerogel-Beschichtung

## Patentansprüche

1. Kohlenstofffaser, die mit einem leitfähigen Kohlenstoff-Aerogel beschichtet ist.

2. Strang, Gewebe oder Vlies enthaltend eine Kohlenstofffaser nach Anspruch 1.

3. Luftfahrzeugbauteil das überwiegend aus Kohlensoffaserverbund besteht und Kohlenstofffasern, Stränge, Gewebe oder Vliesse nach einem der vorangehenden Ansprüche enthält.

4. Luftfahrzeugbauteil nach Anspruch 3 wobei Kohlenstofffasern, Stränge, Gewebe oder Vliesse Teil des Kohlensoffaserverbundes sind.

5. Luftfahrzeug enthaltend Kohlenstofffasern, Stränge, Gewebe oder Vliesse nach einem der vorangehenden Ansprüche.

6. Flugzeug enthaltend Kohlenstofffasern, Stränge, Gewebe oder Vliesse nach einem der vorangehenden Ansprüche.

7. Blitzschutzmittel für Luftfahrzeuge enthaltend Kohlenstofffasern, Stränge, Gewebe oder Vliesse nach einem der vorangehenden Ansprüche.
